# EUROPEAN PATENT APPLICATION

(11) **EP 4 832 126 A1**
(43) Date of publication of application: **28.10.2026**
(21) Application number: 24918007.6
(22) Date of filing: 05.08.2024
(51) Int. Cl.: H01M 10/04, H01M 10/058

(54) **FILM COATING DEVICE AND FILM COATING METHOD**

(30) Priority: 15.01.2024 CN 202410056392
(71) Applicant: Contemporary Amperex Technology Co., Limited, Ningde, Fujian 352100 (CN)
(72) Inventor: LIU, Zhanglong, Ningde, Fujian 352100 (CN); HUANG, Qinkun, Ningde, Fujian 352100 (CN); SU, Shuaifeng, Ningde, Fujian 352100 (CN); BIAN, Fucheng, Ningde, Fujian 352100 (CN); FAN, Xiang, Ningde, Fujian 352100 (CN)
(74) Representative: Straus, Alexander
(86) International application number: PCT/CN2024/109719
(87) International publication number: WO 2025/152395

(57) **Abstract**

The present application provides a film coating device and a film coating method. The film coating device comprises: a feeding mechanism, used for conveying battery cells in the process of coating the battery cells, the feeding mechanism comprising a conveying platform used for placing and conveying the battery cells to move towards the film coating position; a pushing mechanism, used for pushing the battery cells to move towards the film coating position relative to the conveying platform; and a film stretching and coating mechanism, arranged on the tail end side of the moving direction of the conveying platform and used for carrying out film stretching and coating on the battery cells.

## Description

### CROSS-REFERENCE TO RELATED APPLICATION

The present application claims priority to Chinese patent application 202410056392.7 entitled "COATING APPARATUS AND COATING METHOD" and filed on January 15, 2024, which is incorporated herein by reference in its entirety.

### TECHNICAL FIELD

The present application relates to the field of battery production and manufacturing, and in particular, to a coating apparatus and a coating method.

### BACKGROUND

With the rapid development of the lithium battery industry, applying a blue film to the surface of the battery cell is an important method for surface insulation of the battery cell. Among them, the process of pushing the battery cell at the front coating position is a relatively important step that affects the coating quality and cycle time. In addition, the film stretching action of the film stretching rod plays a crucial role in the speed of the entire coating process and the quality of the blue adhesive after the film is stretched.

Currently, in the industry, the front and rear coating positions of coating machines are usually fixed. Due to the limitation of movement space of the film stretching rod in the middle, the distance between the front and rear coating positions is usually large. When coating small battery cells, accidents of battery cells falling off are prone to occur. Moreover, because the front and rear coating positions are far apart, the battery cell is prone to shaking when transitioning from the front coating position to the rear coating position, which affects the coating effect. In addition, after coating one battery, the film stretching rod has to go through relatively complicated operations before starting to coat the next battery, which affects the overall coating cycle time.

Therefore, it is desirable to develop a safe and efficient coating apparatus that improves production efficiency while ensuring production safety and enhancing product competitiveness.

### SUMMARY

In view of the above problems, the present application provides a coating apparatus and a coating method, which may solve the battery cell falling off problem and improve the coating effect, and may also simplify the film stretching action of the film stretching rod, thereby shortening the overall cycle time of the coating mechanism.

In a first aspect, the present application provides a coating apparatus, wherein the coating apparatus includes: a feeding mechanism configured to, during a coating process of a battery cell, convey the battery cell, the feeding mechanism including: a conveying platform configured to place and convey the battery cell toward a coating position; a pushing mechanism configured to push the battery cell to move relative to the conveying platform toward the coating position; and a film stretching and coating mechanism disposed on the side of the movement direction end of the conveying platform and configured to perform film stretching and coating on the battery cell.

With such arrangement, when coating a small-sized battery cell, even if the distance between the front and rear coating positions is large when the battery cell is pushed, by using a push rod, toward the battery cell coating position side and out to the front coating position relative to the conveying platform, the battery cell placed on the conveying platform may be moved further to the rear coating position through making the conveying platform move toward the rear coating position when the film stretching rod is lowered, thus shortening the distance between the front and rear coating positions. This may prevent the battery cell from falling off during the process of conveying the battery cell between the front and rear coating positions.

In some embodiments, the feeding mechanism includes a conveying platform guide rail configured to guide the movement of the conveying platform.

In some embodiments, the feeding mechanism includes a conveying platform driver configured to drive the movement of the conveying platform.

In some embodiments, a workpiece placement portion extending along the movement direction of the conveying platform is provided on the upper surface of the conveying platform and configured to place the battery cell.

In some embodiments, the feeding mechanism includes a pair of guide members, which are respectively disposed on both sides of the workpiece placement portion on the upper surface of the conveying platform. The spacing between the pair of guide members is adjustable, and the battery cell is guided by abutting the pair of guide members against the battery cell.

In some embodiments, the feeding mechanism includes a position detection mechanism configured to detect the position of the battery cell on the workpiece placement portion.

In some embodiments, the feeding mechanism includes a pushing mechanism driver configured to drive the movement of the pushing mechanism.

In some embodiments, the film stretching and coating mechanism includes: a film stretching rod configured for film stretching; and an upper pressure roller and a lower pressure roller configured to coat the battery cell, wherein the lower pressure roller is located above the upper pressure roller, and an opening is formed between the lower pressure roller and the upper pressure roller for the battery cell to pass through.

In some embodiments, compared to the initial position of the upper pressure roller, the initial position of the lower pressure roller is located closer to the initial position of the battery cell in the movement direction of the conveying platform.

By positioning the initial position of the lower pressure roller closer to the initial position of the battery cell in the movement direction of the conveying platform compared to that of the upper pressure roller, the time required for retraction and extension actions of the film stretching rod may be reduced compared to the conventional coating apparatus where the lower and upper pressure rollers are at the same distance from the battery cell in the battery cell conveying direction. This may shorten the overall cycle time of the coating process, making the overall coating action more efficient.

In some embodiments, the initial position of the lower pressure roller is located at a position where it may abut against the film stretching rod in the movement direction of the conveying platform.

By positioning the initial position of the lower pressure roller at a position where it may abut against the film stretching rod in the movement direction of the conveying platform, the retraction and extension actions of the film stretching rod may be reduced. This may further shorten the overall cycle time of the coating process, making the overall coating action more efficient.

In some embodiments, the film stretching and coating mechanism includes a pressing mechanism disposed on the side of the initial position of the battery cell of the film stretching rod and configured to press the battery cell conveyed by the feeding mechanism.

In some embodiments, the film stretching and coating mechanism includes a film stretching rod sliding rail configured to guide the sliding of the film stretching rod.

In some embodiments, the film stretching and coating mechanism includes an upper pressure roller driver that drives the upper pressure roller and a lower pressure roller driver that drives the lower pressure roller.

In some embodiments, an upper pressure roller connecting portion is provided between the upper pressure roller and the upper pressure roller driver, and a lower pressure roller connecting portion is provided between the lower pressure roller and the lower pressure roller driver.

In some embodiments, the film stretching and coating mechanism includes a pressure roller connecting portion guide rail configured to guide the movement of the upper pressure roller connecting portion and the lower pressure roller connecting portion.

In some embodiments, the film stretching and coating mechanism includes a film stretching rod driver that drives the film stretching rod.

In some embodiments, the film stretching and coating mechanism includes a pair of cutters configured for film cutting. The pair of cutters are disposed between the lower pressure roller and the upper pressure roller in a vertical direction, and are arranged on both sides of the opening in a direction orthogonal to the vertical direction and the conveying direction of the battery cell.

In some embodiments, the pair of cutters are respectively disposed in a cutter housing.

In some embodiments, the film stretching and coating mechanism includes a detection unit configured to detect whether the battery cell passes through the area between the pair of cutters.

In some embodiments, the detection unit is a photoelectric sensor which is disposed on the side opposite to the opening in the direction in which the pair of cutters are arranged.

In a second aspect, the present application provides a coating method for coating a battery cell, wherein the coating method includes the following processes: a pre-coating process, in which a pushing mechanism pushes the battery cell to move toward a coating position relative to a conveying platform placing the battery cell, and a film stretching rod is used to adhere the film to be applied and pull the film downward to the coating position; a main coating process, in which when the pushing mechanism pushes the battery cell to a front coating position of a film stretching and coating mechanism, the conveying platform starts to move toward a rear coating position of the film stretching and coating mechanism until the upper end face of the battery cell abuts against a lower pressure roller located at its initial position and the front end of the lower end face of the battery cell abuts against an upper pressure roller, thereby using the lower pressure roller and the upper pressure roller to coat the front end face and the upper and lower large surfaces of the battery cell; and a retraction process, in which after the main coating process is completed, the conveying platform and the pushing mechanism are simultaneously retracted toward the front coating position, so that the film stretching rod abuts against the lower pressure roller located at its initial position.

When coating a small-sized battery cell, even if the distance between the front and rear coating positions is large, the battery cell placed on the conveying platform may be moved further to the rear coating position through making the conveying platform move toward the rear coating position when the film stretching rod is lowered, thus shortening the distance between the front and rear coating positions. This may prevent the battery cell from falling off during the process of conveying the battery cell between the front and rear coating positions.

In some embodiments, during the main coating process, when the pushing mechanism pushes the battery cell to the front coating position of the film stretching and coating mechanism, the pressing mechanism located at the front coating position presses the battery cell, and while the pressing mechanism is pressing the battery cell, the conveying platform moves toward the rear coating position.

In some embodiments, during the retraction process, the film stretching rod is moved only vertically upward until it abuts against the lower pressure roller located at the initial position.

Since the film stretching rod may abut against the lower pressure roller at its initial position simply by moving it vertically upward, the retraction and extension actions of the film stretching rod may be reduced. This may further shorten the overall cycle time of the coating process, making the overall coating action more efficient.

The aforementioned description is only an overview of the technical solution of the present application. In order to better understand the technical means of the present application and thus implement them according to the contents of the specification, and in order to make the aforementioned and other objectives, features, and advantages of the present application more obvious and understandable, detailed description of the present application will be made specifically below.

### DESCRIPTION OF DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings may also be obtained according to these drawings without any creative effort. Additionally, it should be noted that, in the drawings, the drawings are not drawn to actual scale.
FIG. 1 is an overall front view showing a coating apparatus disclosed in an embodiment of the present application;
FIG. 2 is a top view showing a front coating position of a film stretching and coating mechanism included in a coating apparatus disclosed in an embodiment of the present application;
FIG. 3 is a perspective view showing the portion of the coating apparatus of FIG. 1 located to the left of the film stretching rod;
FIG. 4 is a rear view showing a coating apparatus disclosed in an embodiment of the present application; and

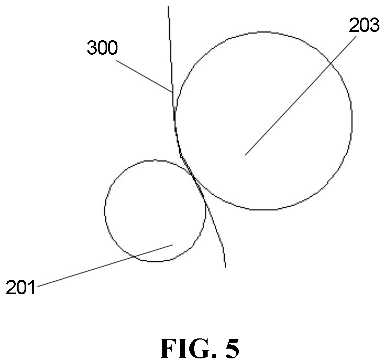

FIG. 5 is a schematic diagram showing the positional relationship between a film stretching rod and a lower pressure roller in a coating apparatus disclosed in an embodiment of the present application.

### Reference numerals:

Coating apparatus 1000;
Feeding mechanism 100, film stretching and coating mechanism 200, film (blue film) 300;
conveying platform 101, conveying platform guide rail 102, conveying platform driver (conveying platform drive cylinder) 103, pushing mechanism (push rod) 104, workpiece placement portion (placement rail) 105, guide member 106, position detection mechanism 107;
Film stretching rod 201, upper pressure roller 202, lower pressure roller 203, opening 204, pressing mechanism 205, film stretching rod sliding rail 206, upper pressure roller driver 207, lower pressure roller driver 208, upper pressure roller connecting portion (upper pressure roller connecting plate) 209, lower pressure roller connecting portion (lower pressure roller connecting plate) 210, pressure roller connecting portion guide rail 211, film stretching rod driver 212, cutter housing 213, detection unit (photoelectric sensor) 214; light beam 215.

### DETAILED DESCRIPTION

Embodiments in technical solutions of the present application will be described in detail below in conjunction with the accompanying drawings. The following embodiments are only configured to more clearly illustrate the technical solutions of the present application, and therefore are only used as examples and may not be used to limit the scope of protection of the present application.

Unless otherwise defined, all technical and scientific terms used herein have the same meanings as generally understood by those skilled in the art of the present application; the terms used herein are intended only to describe specific embodiments and are not intended to limit the present application; and the terms "comprising", "including" and "having" and any variations thereof in the description and claims of the present application and in the foregoing description of the accompanying drawings are intended to cover non-exclusive inclusions.

In the descriptions of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated objects, indicating that there may be three kinds of relationships, such as A and/or B may indicate the following three situations: A exists alone, A and B exist at the same time, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, may not be understood as a limitation to the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meanings of the above terms in the embodiments of the present application may be understood according to specific situations.
Currently, with the rapid development of the lithium battery industry, the requirements for production efficiency of power battery cells are increasingly high, the requirements for safety of lithium battery production are also increasing, and the production cost is required to be significantly reduced.

The inventors note that applying a blue film to the surface of the battery cell is an important method for surface insulation of the battery cell. Among them, the process of pushing the battery cell at the front coating position is a relatively important step that affects the coating quality and cycle time. In addition, the film stretching action of the film stretching rod plays a crucial role in the speed of the entire coating process and the quality of the blue adhesive after the film is stretched.

Currently, in the industry, the front and rear coating positions of coating machines are usually fixed. Due to the limitation of movement space of the film stretching rod in the middle, the distance between the front and rear coating positions is usually large. When coating small battery cells, accidents of battery cells falling off are prone to occur. In addition, the coating and film stretching process for lithium batteries is a bottleneck process in coating equipment. Due to its complexity, the process significantly affects the equipment's cycle time, requiring additional investment in equipment to meet the requirements for coating cycle time.

To address the problem of battery cells falling off during the coating process, the inventors discovered that the conveying platform used to convey the battery cells could be made movable. Specifically, when the film stretching rod is lowered, the conveying platform may move further forward, thereby reducing the distance between the front and rear coating positions. In addition, to reduce the overall cycle time of the coating process, the position of the lower pressure roller in the battery cell conveying direction may be changed. Specifically, compared to the initial position of the upper pressure roller, the initial position of the lower pressure roller is located closer to the initial position of the battery cell in the movement direction of the conveying platform.

Based on the above considerations, in order to solve the above problems, a coating apparatus is designed. By making the conveying platform configured to convey the battery cells movable and making the initial position of the lower pressure roller closer to the initial position of the battery cell compared to the initial position of the upper pressure roller, the battery cells may be prevented from shaking or even falling off during the coating process, and the overall coating cycle time is improved.

The coating apparatus disclosed in the embodiments of the present application may be used, but is not limited to, for coating power batteries of automobiles, ships, aircraft, etc., and may also be applied to other workpieces that are required to be coated. By using the feeding mechanism and the coating apparatus including the feeding mechanism disclosed in the present application, it is possible to prevent the battery cell from shaking or even falling off when passing through the transition zone between the front and rear coating positions, and to simplify the film stretching action of the film stretching rod, thereby reducing the overall cycle time of the coating mechanism.

The following embodiments, for the convenience of illustration, take a coating apparatus 1000 in one embodiment of the present application as an example for the description.

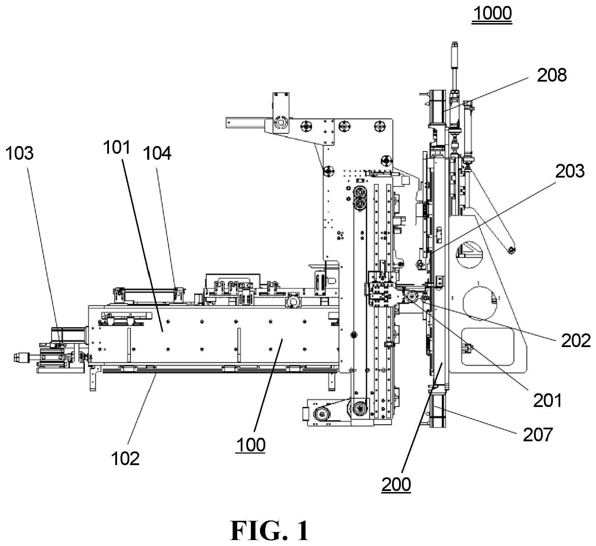

The coating apparatus 1000 of the present application is an apparatus configured to convey a battery cell and coat it. As shown in FIG. 1, in this embodiment, the coating apparatus 1000 includes a feeding mechanism 100 and a film stretching and coating mechanism 200.

The feeding mechanism 100 is configured to convey the battery cell during the coating process of the battery cell. The feeding mechanism 100 includes: a conveying platform 101 configured to place and convey the battery cell (not shown) as the object to be coated toward the coating position; and a push rod 104 as a pushing mechanism configured to push the battery cell to move toward the coating position relative to the conveying platform 101.

The film stretching and coating mechanism 200 is disposed on the side of the movement direction end of the conveying platform 101 and is configured to apply film stretching and coating to the battery cell.

In this embodiment, the conveying platform 101 may move forward or backward relative to the battery cell coating position. With such arrangement, when coating a small-sized battery cell, even if the distance between the front and rear coating positions is large when the battery cell is pushed, by using a push rod 104, toward the battery cell coating position side and out to the front coating position relative to the conveying platform 101, the battery cell placed on the conveying platform 101 may be moved further to the rear coating position through making the conveying platform 101 move toward the rear coating position (the right side in the Figure) when the film stretching rod 201 is lowered, thus shortening the distance between the front and rear coating positions. This may prevent the battery cell from falling off during the process of conveying the battery cell between the front and rear coating positions.

Here, the so-called front and rear coating positions refer to the two workstations of the film stretching and coating mechanism 200 that perform the coating operation on the battery cell. The terms front and rear are relative to the film stretching rod 201. During the conveying process for coating the battery cell, in the direction in which the battery cell moves from the initial position to the final coating completion position, the coating position located before the film stretching rod 201, that is, the coating position located on the side of the initial position of the battery cell of the film stretching rod 201, is called the front coating position; and the coating position located after the film stretching rod 201, that is, the coating position located on the opposite side of the initial position of the battery cell of the film stretching rod 201, is called the rear coating position. For ease of understanding, the portion of the film stretching and coating mechanism 200 located to the left of the film stretching rod 201 in FIG. 1 is called the front coating position, and the portion of the film stretching and coating mechanism 200 located to the right of the film stretching rod 201 is called the rear coating position.

Furthermore, the so-called initial position of the battery cell refers to the position where the battery cell is placed on the conveying platform 101, before the conveying platform 101 begins to move and before it is pushed by the push rod 104.

According to some embodiments of the present application, the feeding mechanism 100 includes a conveying platform guide rail 102 configured to guide the movement of the conveying platform 101.

The feeding mechanism 100, including the conveying platform guide rail 102, may guide the movement of the conveying platform 101 more efficiently and smoothly.

According to some embodiments of the present application, the feeding mechanism 100 includes a conveying platform driver 103 configured to drive movement of the conveying platform 101. In FIG. 1, a cylinder is used as the conveying platform driver, which is sometimes referred to below as conveying platform drive cylinder 103.

The feeding mechanism 100 includes a conveying platform drive cylinder 103 located to the left of the conveying platform 101, which enables bidirectional movement of the conveying platform 101. That is, by extending the cylinder rod, the conveying platform 101 moves to the right in FIG. 1, and conversely, by retracting the cylinder rod, the conveying platform 101 moves to the left in FIG. 1. Thus, the conveying platform 101 and the battery cell may move forward and backward in both directions through a simple structure.

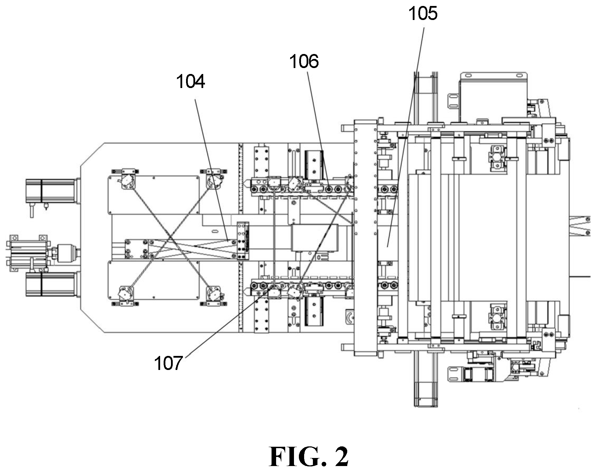

According to some embodiments of the present application, a workpiece placement portion 105 extending along the moving direction of the conveying platform 100 is provided on the upper surface of the conveying platform 101 and configured to place the battery cell. In FIG. 2, the workpiece placement portion 105 consists of a pair of placement rails for placing the battery cell.

By arranging the pair of placement rails, the battery cell may be pushed by the push rod 104 and moved between the pair of placement rails. Of course, the workpiece placement portion 105 is not limited to a pair of rails. As long as it is convenient to use the push rod 104 to push the battery cell to move on the workpiece placement portion, it may also be any structure such as a groove or a protrusion.

According to some embodiments of the present application, as shown in FIG. 2, the feeding mechanism 100 includes a pair of guide members 106. The pair of guide members 106 are respectively disposed on both sides of the workpiece placement portion (placement rail) 105 on the upper surface of the conveying platform 100. The spacing between the pair of guide members 106 is adjustable, and the battery cell is guided by abutting the pair of guide members against the battery cell on the placement rail 105. In FIG. 2, the pair of guide members 106 are a pair of guide-roller walls.

Here, the guide-roller wall is a sidewall composed of a set of rotating rollers, as shown in FIG. 2, each set of rotating rollers is arranged along the extension direction of the placement rail 105, and each rotating roller is disposed perpendicular to the upper surface of the conveying platform 100. The movement of the battery cell is guided by the rotation of each rotating roller. Furthermore, battery cells of different widths may be accommodated by means of the spacing between the pair of guide-roller walls 106 being adjustable. Of course, as long as it may guide the movement of the battery cell, the guide member 106 is not limited to the guide-roller wall and may be any structure.

According to some embodiments of the present application, as shown in FIG. 2, the feeding mechanism 100 includes a position detection mechanism 107, which is used to detect the position of the battery cell on the workpiece placement portion 105.

In Fig. 2, the position detection mechanism 107 employs a photoelectric sensor. Of course, other position detection mechanisms may also be used. By arranging the photoelectric sensor, it is possible to monitor whether the battery cell has detached from the placement rail 105, especially when the battery cell passes through a blind spot.

According to some embodiments of the present application, the feeding mechanism 100 includes a pushing mechanism driver (not shown) configured to drive the movement of the pushing mechanism 104. The pushing mechanism driver is only required to be capable of driving the movement of the pushing mechanism 104; there are no special requirements for its drive type and setting position.

According to some embodiments of the present application, as shown in FIGS. 1, 3, and 4, the film stretching and coating mechanism 200 includes: a film stretching rod 201 configured for film stretching; and an upper pressure roller 202 and a lower pressure roller 203 configured to coat the battery cell. The lower pressure roller 203 is located above the upper pressure roller 202, and an opening 204 for the battery cell to pass through is formed between the lower pressure roller 203 and the upper pressure roller 202.

According to some embodiments of the present application, compared to the initial position of the upper pressure roller 202, the initial position of the lower pressure roller 203 is located closer to the initial position of the battery cell in the movement direction of the conveying platform 101.

In this embodiment, the upper pressure roller 202 does not translate as a whole, but rotates only around the center of the roller as the rotation center. In contrast, the lower pressure roller 203 has two positions: an initial position and a front-end-face rolling position. When it is necessary to roll the front end face of the battery cell, the lower pressure roller 203 is lowered from the initial position to roll the front end face of the battery cell. After that, the lower pressure roller returns to the initial position. In other words, the lower pressure roller 203 is located at the initial position except when it is necessary to roll the front end face of the battery cell.

As mentioned above, by positioning the initial position of the lower pressure roller 203 closer to the initial position of the battery cell in the movement direction of the conveying platform 101 compared to that of the upper pressure roller 202, the time required for retraction and extension actions of the film stretching rod 201 may be reduced compared to the conventional coating apparatus where the lower pressure roller 203 and the upper pressure roller 202 are at the same distance from the battery cell in the battery cell conveying direction. This may shorten the overall cycle time of the coating process, making the overall coating action more efficient.

According to some embodiments of the present application, the initial position of the lower pressure roller 203 is located at a position where it may abut against the film stretching rod 201 in the movement direction of the conveying platform.

By positioning the initial position of the lower pressure roller 203 at a position where it may abut against the film stretching rod 201 in the movement direction of the conveying platform, the retraction and extension actions of the film stretching rod 201 may be reduced. This may further shorten the overall cycle time of the coating process, making the overall coating action more efficient.

According to some embodiments of the present application, the film stretching and coating mechanism 200 includes a pressing mechanism 205 disposed on the side of the initial position of the battery cell of the film stretching rod 201 and configured to press the battery cell conveyed by the feeding mechanism 100.

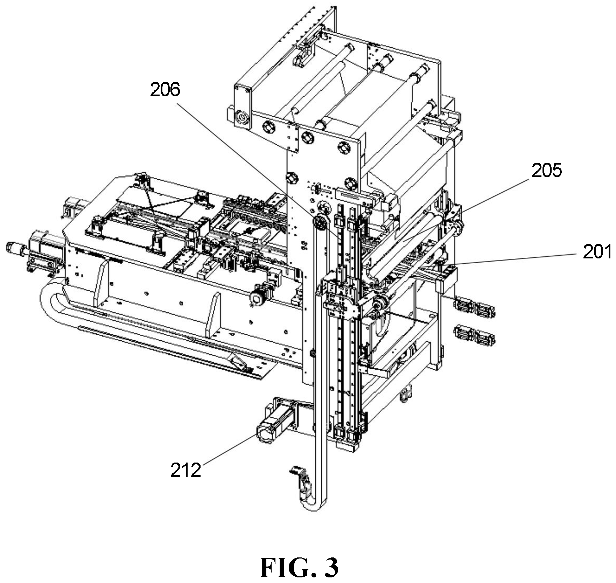

By arranging the pressing mechanism 205, when the battery cell reaches the pressing mechanism 205 located at the front coating position as shown in FIG. 3, the pressing mechanism 205 presses the battery cell, and the conveying platform drive cylinder 103 shown in FIG. 1 extends out, so that the battery cell moves forward as a whole with the front coating position while the pressing mechanism 205 is pressing the battery cell. This may prevent the battery cell from jumping around during the coating process, which would lead to coating defects.

According to some embodiments of the present application, as shown in FIG. 3, the film stretching and coating mechanism 200 includes a film stretching rod slide rail 206 configured to guide the sliding of the film stretching rod 201.
By arranging the film stretching rod slide rail 206, the film stretching rod 201 may move on the film stretching rod slide rail 206.

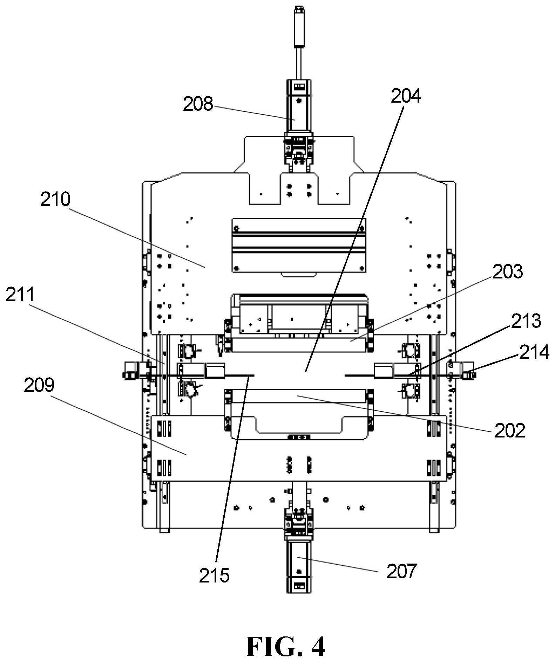

According to some embodiments of the present application, as shown in FIG. 4, the film stretching and coating mechanism 200 includes an upper pressure roller driver 207 that drives the upper pressure roller 202 and a lower pressure roller driver 208 that drives the lower pressure roller 203.

According to some embodiments of the present application, as shown in FIG. 4, an upper pressure roller connecting portion 209 is provided between the upper pressure roller 202 and the upper pressure roller driver 207, and a lower pressure roller connecting portion 210 is provided between the lower pressure roller 203 and the lower pressure roller driver 208.

As shown in FIG. 4, in this embodiment, both the upper pressure roller driver 207 and the lower pressure roller driver 208 are servo motors, and both the upper pressure roller connecting portion 209 and the lower pressure roller connecting portion 210 are connecting plates. That is, the upper pressure roller servo motor 207 is connected to the upper pressure roller 202 through the upper pressure roller connecting plate 209, thereby driving the upper pressure roller 202, and the lower pressure roller servo motor 208 is connected to the lower pressure roller 203 through the lower pressure roller connecting plate 210, thereby driving the lower pressure roller 203.

According to some embodiments of the present application, as shown in FIG. 4, the film stretching and coating mechanism 200 includes a pressure roller connecting portion guide rail 211 configured to guide the movement of the upper pressure roller connecting portion 209 and the lower pressure roller connecting portion 210.

According to some embodiments of the present application, as shown in FIG. 3, the film stretching and coating mechanism 200 includes a film stretching rod driver 212 that drives the film stretching rod 201.

According to some embodiments of the present application, as shown in FIG. 4, the film stretching and coating mechanism 200 includes a pair of cutters configured for film cutting (not shown), the pair of cutters are disposed between the lower pressure roller 203 and the upper pressure roller 202 in a vertical direction, and are arranged on both sides of the opening 204 in a direction orthogonal to the vertical direction and the conveying direction of the battery cell. Furthermore, according to some embodiments of the present application, the pair of cutters are respectively disposed in a cutter housing 213.

The film located between the lower pressure roller 203 and the upper pressure roller 202 may be cut using the pair of cutters.

According to some embodiments of the present application, the film stretching and coating mechanism 200 includes a detection unit 214 configured to detect whether the battery cell passes through the area between the pair of cutters. In addition, according to some embodiments of the present application, the detection unit 214 is a photoelectric sensor which is disposed on the side opposite to the opening 204 in the direction in which the pair of cutters are arranged.

As shown in FIG. 4, by arranging the pair of photoelectric sensors 214, it is possible to detect whether there is a film between the lower pressure roller 203 and the upper pressure roller 202. When the pair of photoelectric sensors 214 is used to detect that there is a film between the lower pressure roller 203 and the upper pressure roller 202, the pair of cutters are driven to cut off the film when cutting is required.

According to some embodiments of the present application, the present application further provides a coating method for coating a battery cell, wherein the coating method includes the following processes: a pre-coating process, in which a pushing mechanism 104 pushes the battery cell to move toward a coating position relative to a conveying platform 101 placing the battery cell, and a film stretching rod 201 is used to adhere the film to be applied and pull the film downward to the coating position; a main coating process, in which when the pushing mechanism 104 pushes the battery cell to a front coating position of a film stretching and coating mechanism 200, the conveying platform starts to move toward a rear coating position of the film stretching and coating mechanism 200 until an upper end face of the battery cell abuts against a lower pressure roller 203 located at its initial position and a front end of a lower end face of the battery cell abuts against an upper pressure roller 202, thereby using the lower pressure roller 203 and the upper pressure roller 202 to coat a front end face and the upper and lower large surfaces of the battery cell; and a retraction process, in which after the main coating process is completed, the conveying platform 101 and the pushing mechanism 104 are simultaneously retracted toward the front coating position, so that the film stretching rod 201 abuts against the lower pressure roller 203 located at its initial position.

Here, using the lower pressure roller 203 and the upper pressure roller 202 to coat the front end face and the upper and lower large surfaces of the battery cell specifically means that, when the conveying platform starts to move toward the rear coating position of the film stretching and coating mechanism 200 until the upper end face of the battery cell abuts against the lower pressure roller 203 located at its initial position and the front end of the lower end face of the battery cell abuts against the upper pressure roller 202, the lower pressure roller 203 is used to roll the entire front end face of the battery cell, and then, the pushing mechanism 104 continues to push the battery cell forward, and the lower pressure roller 203 and the upper pressure roller 202 are used to complete the coating of the upper and lower large surfaces of the battery cell.

When coating a small-sized battery cell, even if the distance between the front and rear coating positions is large, the battery cell placed on the conveying platform 101 may be moved further to the rear coating position (the right side in the Figure) through making the conveying platform 101 move toward the rear coating position when the film stretching rod 201 is lowered, thus shortening the distance between the front and rear coating positions. This may prevent the battery cell from falling off during the process of conveying the battery cell between the front and rear coating positions.

According to some embodiments of the present application, during the main coating process, when the pushing mechanism 104 pushes the battery cell to the front coating position of the film stretching and coating mechanism 200, the pressing mechanism 205 located at the front coating position presses the battery cell, and while the pressing mechanism 205 is pressing the battery cell, the conveying platform 101 moves toward the rear coating position.

By arranging the pressing mechanism 205, when the battery cell reaches the pressing mechanism 205 located at the front coating position as shown in FIG. 3, the pressing mechanism 205 presses the battery cell, and the conveying platform drive cylinder 103 shown in FIG. 1 extends out, so that the battery cell moves forward as a whole with the front coating position while the pressing mechanism 205 is pressing the battery cell. This may prevent the battery cell from jumping around during the coating process, which would lead to coating defects.

According to some embodiments of the present application, during the retraction process, the film stretching rod is moved only vertically upward until it abuts against the lower pressure roller located at its initial position.

Since the film stretching rod may abut against the lower pressure roller at its initial position simply by moving it vertically upward, the retraction and extension actions of the film stretching rod 201 may be reduced. This may further shorten the overall cycle time of the coating process, making the overall coating action more efficient.

Finally, it is to be noted that the above embodiments are merely used for illustrating the technical solutions of the present application, not for limiting them. Although the present application is described in detail with reference to the foregoing embodiments, those of ordinary skill in the art should understand that they may still modify the technical solutions described in the foregoing embodiments, or equivalently substitute some or all of the technical features therein. These modifications or substitutions do not cause the essence of the corresponding technical solutions to depart from the scope of the technical solutions of the embodiments of the present application, and they should be covered by the scope of the claims and specification of the present application. In particular, the technical features mentioned in the various embodiments may be combined in any manner provided that there is no structural conflict. The present application is not limited to the specific embodiments disclosed herein, but rather includes all technical solutions falling within the scope of the claims.

## Claims

1. A coating apparatus, wherein
the coating apparatus comprises:
a feeding mechanism configured to, during a coating process of a battery cell, convey the battery cell, the feeding mechanism comprising: a conveying platform configured to place and convey the battery cell toward a coating position; a pushing mechanism configured to push the battery cell to move relative to the conveying platform toward the coating position; and
a film stretching and coating mechanism disposed on the side of the movement direction end of the conveying platform and configured to perform film stretching and coating on the battery cell.

2. The coating apparatus according to claim 1, wherein
the feeding mechanism comprises a conveying platform guide rail configured to guide the movement of the conveying platform.

3. The coating apparatus according to claim 1 or 2, wherein
the feeding mechanism comprises a conveying platform driver configured to drive the movement of the conveying platform.

4. The coating apparatus according to any one of claims 1 to 3, wherein
a workpiece placement portion extending along the movement direction of the conveying platform is provided on an upper surface of the conveying platform and configured to place the battery cell.

5. The coating apparatus according to claim 4, wherein
the feeding mechanism comprises a pair of guide members, which are respectively disposed on both sides of the workpiece placement portion on the upper surface of the conveying platform, a spacing between the pair of guide members is adjustable, and the battery cell is guided by abutting the pair of guide members against the battery cell.

6. The coating apparatus according to claim 4 or 5, wherein
the feeding mechanism comprises a position detection mechanism configured to detect the position of the battery cell on the workpiece placement portion.

7. The coating apparatus according to any one of claims 1 to 6, wherein
the feeding mechanism comprises a pushing mechanism driver configured to drive the movement of the pushing mechanism.

8. The coating apparatus according to any one of claims 1 to 7, wherein
the film stretching and coating mechanism comprises:
a film stretching rod configured for film stretching; and
an upper pressure roller and a lower pressure roller configured to coat the battery cell, wherein the lower pressure roller is located above the upper pressure roller, and an opening is formed between the lower pressure roller and the upper pressure roller for the battery cell to pass through.

9. The coating apparatus according to claim 8, wherein
compared to the initial position of the upper pressure roller, the initial position of the lower pressure roller is located closer to the initial position of the battery cell in the movement direction of the conveying platform.

10. The coating apparatus according to claim 9, wherein
the initial position of the lower pressure roller is located at a position where it may abut against the film stretching rod in the movement direction of the conveying platform.

11. The coating apparatus according to any one of claims 8 to 10, wherein
the film stretching and coating mechanism comprises a pressing mechanism disposed on the side of the initial position of the battery cell of the film stretching rod and configured to press the battery cell conveyed by the feeding mechanism.

12. The coating apparatus according to any one of claims 8 to 11, wherein
the film stretching and coating mechanism comprises a film stretching rod sliding rail configured to guide the sliding of the film stretching rod.

13. The coating apparatus according to any one of claims 8 to 12, wherein
the film stretching and coating mechanism comprises an upper pressure roller driver that drives the upper pressure roller and a lower pressure roller driver that drives the lower pressure roller.

14. The coating apparatus according to claim 13, wherein
an upper pressure roller connecting portion is provided between the upper pressure roller and the upper pressure roller driver, and a lower pressure roller connecting portion is provided between the lower pressure roller and the lower pressure roller driver.

15. The coating apparatus according to claim 14, wherein
the film stretching and coating mechanism comprises a pressure roller connecting portion guide rail configured to guide the movement of the upper pressure roller connecting portion and the lower pressure roller connecting portion.

16. The coating apparatus according to any one of claims 8 to 15, wherein
the film stretching and coating mechanism comprises a film stretching rod driver that drives the film stretching rod.

17. The coating apparatus according to any one of claims 8 to 16, wherein
the film stretching and coating mechanism comprises a pair of cutters configured for film cutting, the pair of cutters are disposed between the lower pressure roller and the upper pressure roller in a vertical direction, and are arranged on both sides of the opening in a direction orthogonal to the vertical direction and the conveying direction of the battery cell.

18. The coating apparatus according to any one of claims 17, wherein
the pair of cutters are respectively disposed in a cutter housing.

19. The coating apparatus according to claim 17 or 18, wherein
the film stretching and coating mechanism comprises a detection unit configured to detect whether the battery cell passes through the area between the pair of cutters.

20. The coating apparatus according to any one of claims 19, wherein
the detection unit is a photoelectric sensor which is disposed on the side opposite to the opening in the direction in which the pair of cutters are arranged.

21. A coating method for coating a battery cell, wherein
the coating method comprises the following processes:
a pre-coating process, in which a pushing mechanism pushes the battery cell to move toward a coating position relative to a conveying platform placing the battery cell, and a film stretching rod is used to adhere a film to be applied and pull the film downward to the coating position;
a main coating process, in which when the pushing mechanism pushes the battery cell to a front coating position of a film stretching and coating mechanism, the conveying platform starts to move toward a rear coating position of the film stretching and coating mechanism until an upper end face of the battery cell abuts against a lower pressure roller located at its initial position and a front end of a lower end face of the battery cell abuts against an upper pressure roller, thereby using the lower pressure roller and the upper pressure roller to coat a front end face and the upper and lower large surfaces of the battery cell; and
a retraction process, in which after the main coating process is completed, the conveying platform and the pushing mechanism are simultaneously retracted toward the front coating position, so that the film stretching rod abuts against the lower pressure roller located at its initial position.

22. The coating method according to claim 21, wherein
during the main coating process, when the pushing mechanism pushes the battery cell to the front coating position of the film stretching and coating mechanism, a pressing mechanism located at the front coating position presses the battery cell, and while the pressing mechanism is pressing the battery cell, the conveying platform moves toward the rear coating position.

23. The coating method according to claim 21 or 22, wherein
during the retraction process, the film stretching rod is moved only vertically upward until it abuts against the lower pressure roller located at its initial position.
